# EUROPEAN PATENT SPECIFICATION

(11) **EP 2 493 790 B1**
(45) Date of publication and mention of the grant of the patent: **05.03.2014**
(21) Application number: 10798604.4
(22) Date of filing: 25.10.2010
(51) Int. Cl.: B65G 47/51, B65G 47/57

(54) **ORDERING DEVICE FOR THE TRANSFER OF PRODUCTS GROUPED ON PLATES TO A BUFFER UNIT**
ORDNUNGSVORICHTUNG FÜR DEN TRANSFER VON AUF PLATTEN GRUPPIERTEN PRODUKTEN ZU EINER PUFFEREINHEIT
DISPOSITIF DE CLASSEMENT POUR LE TRANSFERT DE PRODUITS REGROUPÉS SUR DES PLAQUES VERS UNE UNITÉ TAMPON

(30) Priority: 26.10.2009 IT TO20090817
(43) Date of publication of application: 05.09.2012
(73) Proprietor: Tecnosweet S.r.l., 12051 Alba (Cuneo) (IT)
(72) Inventor: NESCI, Domenico, I-12051 Alba (Cuneo) (IT)
(74) Representative: Buzzi, Franco
(86) International application number: PCT/IB2010/054824
(87) International publication number: WO 2011/051877

(56) References cited:
- EP-A1- 0 026 545
- EP-A1- 0 538 742
- EP-A1- 0 684 196
- WO-A1-2008/095861
- DE-A1- 4 124 943

## Description

### Field of the invention

The present invention relates in general to the confectionery industry, with particular albeit non-exclusive reference to the production of chocolate articles, and regards more in particular a device for the transfer of products of this sort grouped on plates to a buffer unit usually provided upstream of packaging of the products.

### Prior art

Traditionally, the plates on which the products are grouped in orderly ranks are fed in succession by a horizontal conveying line to the buffer unit, which typically comprises gondolas for receiving the plates, which can be translated vertically along an accumulation path.

EP-0538742A1 discloses a transfer device of products by a horizontal conveying line to a buffer unit comprising vertically translatable gondolas. WO 2008/095 861 A1 discloses a device according to the preamble of claim 1.

Normally, insertion of the products or of the plates within the gondolas of the buffer unit is performed directly by the horizontal conveying line, with relatively long times as well as with the drawback of a positioning of the plates that at times is imprecise and with consequent problems in the subsequent steps of treatment of the products.

### Summary of the invention

The object of the present invention is to overcome the aforesaid drawback, rendering insertion of the plates of products within the gondolas of the buffer unit more precise and at the same time also faster.

According to the invention, the above object is achieved with the features of claim 1, and thanks to the fact that each gondola of the buffer unit has respective multiple shelves set on top of one another and to the fact that set between the conveying line and the buffer unit is an ordering device, which is actuated in synchronism with the conveying line and buffer unit and includes at least one vertical translator bearing sets of shelves designed to receive from said conveying line corresponding sets of plates set on top of one another to transfer them into corresponding gondolas of the buffer unit.

Thanks to this arrangement transfer of the plates from the conveying line to the buffer unit is performed in a more efficient and precise way.

According to a preferred embodiment of the invention, the ordering device comprises a pair of vertical translators, with the brackets of the first translator staggered with respect to the brackets of the second translator.

In this way, the transfer of sets of plates from the brackets of one vertical translator to the gondolas of the buffer unit can be performed simultaneously with loading of plates from the conveying line to the brackets of the other vertical translator, thus reducing the transfer times.

Conveniently, the two vertical translators are actuated independently by steps in a lowered position for receiving the plates from the conveying line, continuously during displacement from the lowered position to a raised position for transfer of the plates to the gondolas of the buffer unit, and with fast continuous motion during return from said raised position to said lowered position.

The operations of transfer are conveniently performed via ordinary pusher means.

According to a further advantageous characteristic of the invention, the number of brackets of the or of each vertical translator is twice the number of shelves set on top of one another of each gondola of the buffer unit. This enables transfer in rapid succession to the buffer unit of two sets of plates each time transferred on said shelves by the conveying line, thus rendering the transfer operations even faster.

### Brief description of the drawings

The invention will now be described in detail with reference to the annexed drawings, wherein:
Figure 1 is a schematic perspective view of a transfer device according to the invention; and
Figures 2-6 are views similar to that of Figure 1 that exemplify the steps of operation of the transfer device according to the invention.

### Detailed description of the invention

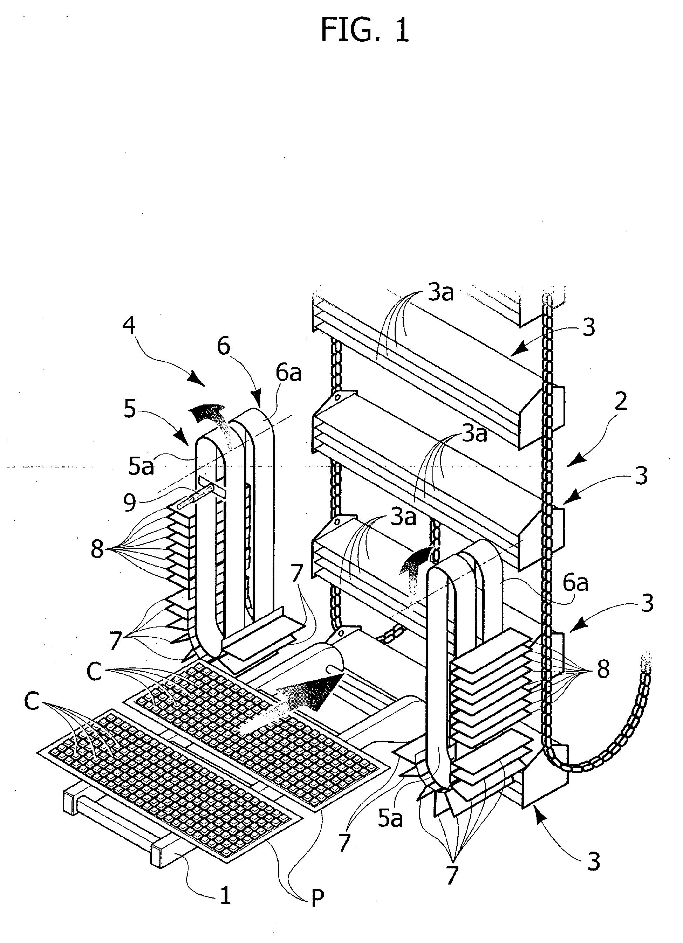

With initial reference to Figure 1, the components of the transfer device according to the invention are represented schematically, omitting for simplicity their corresponding motor drives as well as elements (such as the pushers which will be described hereinafter) that are generally conventional and hence within the reach of the person skilled in the branch.

Said components basically include a horizontal conveying line 1, supplied along which are plates P, which are set adjacent to one another in a transverse direction and each of which bears a plurality of products, for example chocolates C, arranged in orderly ranks, and a motor-driven buffer unit 2.

The plates P must be transferred to the buffer unit 2, which comprises in a way generally in itself known gondolas 3 for receiving plates P, said gondolas being vertically translatable upwards, in the immediate proximity of the terminal end of the conveying line 1, and hence along accumulation paths that are alternately descending and ascending.

According to one of the peculiar characteristics of the invention, the gondolas 3 of the buffer unit 2 include sets of shelves 3a set on top of one another: in the case of the example illustrated, each gondola 3, set at a distance from the contiguous gondolas 3, comprises four shelves 3a set on top of one another. However, said number is not to be understood in a limiting sense.

According to the other peculiar aspect of the invention, set between the conveying line 1 and the buffer unit 2 is an ordering device, designated as a whole by 4, provided for receiving from said conveying line 1 sets of plates P set on top of one another and transferring them jointly to corresponding gondolas 3 of the buffer unit 2.

In the case of the example illustrated, the ordering device 4 comprises a first vertical translator or elevator 5 and a second vertical translator or elevator 6, which are adjacent to one another and both of which include a respective pair of motor-driven endless chains or belts 5a, 6a, set at a distance from one another.

The chains 5a of the vertical translator 5 bear respective sets of brackets 7 set on top of one another and facing one another, and likewise the chains 6a of the vertical translator 6 bear respective sets of brackets 8 set on top of one another and facing one another. In the case of the example illustrated, the number of the brackets 7 and that of the brackets 8 is twice the number of the shelves 3a of the gondolas 3 of the buffer unit 2, i.e., said brackets 7, 8 are eight in number. It should, however, be pointed out that also this number is provided by way of example, in so far as the brackets 7 and 8 could be provided in the same number as, or in a multiple greater than two of, the shelves 3a of the gondolas 3.

The vertical translators 5, 6 are operated independently but synchronised with respect to one another so that, when the brackets 7 translate from below upwards, the brackets 8 translate accordingly from above downwards, and vice versa, with the modalities clarified in what follows.

Synchronised operation of the vertical translators 5, 6 is, however, also such that, as will be seen in what follows, during the step of loading of the plates P on the brackets 7 or else 8, the other brackets 8 or else 7, from which the plates P have been previously transferred to the gondolas 3, descend again rapidly into a waiting position, to be ready to replace the brackets 7 or 8, respectively, immediately after -the latter, loaded with the plates P, are translated towards the raised position for transfer to the buffer unit 2.

Actuation of the vertical translators 5, 6, operated for example via respective brushless electric motors (not illustrated), is governed also in synchronism with the of the plates P along the conveying line 1 and with the steps of movement and arrest of the gondolas 3 of the buffer unit 2.

The device according to the invention is moreover equipped with a pusher of a generally conventional type (for simplicity of illustration represented schematically and designated by 9) and within the reach of the person skilled in the branch, having the function of transferring, also with the modalities clarified in what follows, the plates P from the brackets 7, 8 of the vertical translators 5, 6 to the gondolas 3 of the buffer unit 2.

Operation of the transfer device will be described hereinafter.

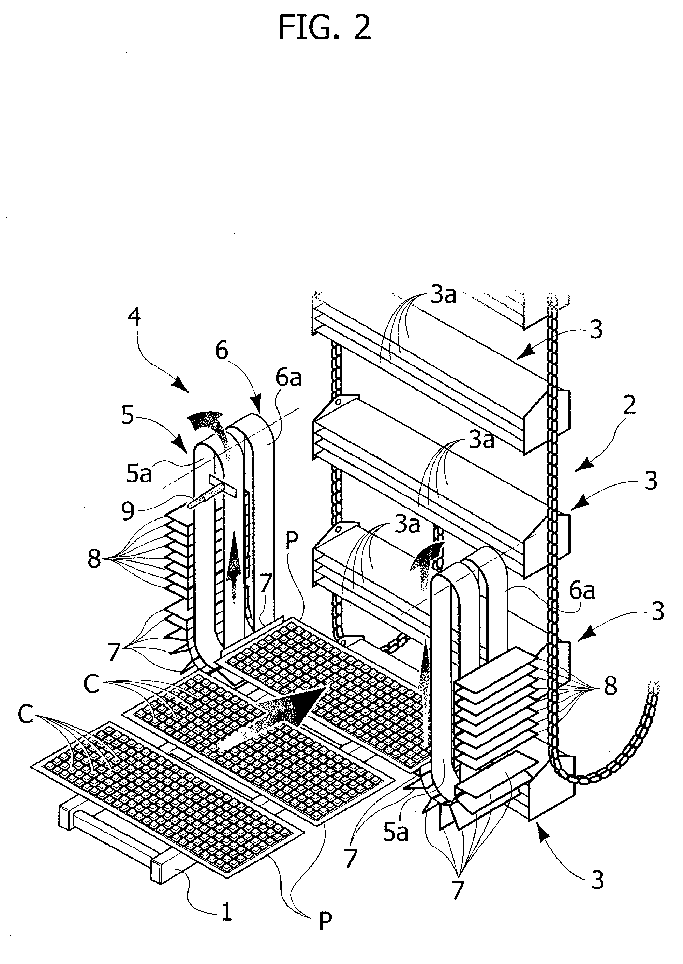

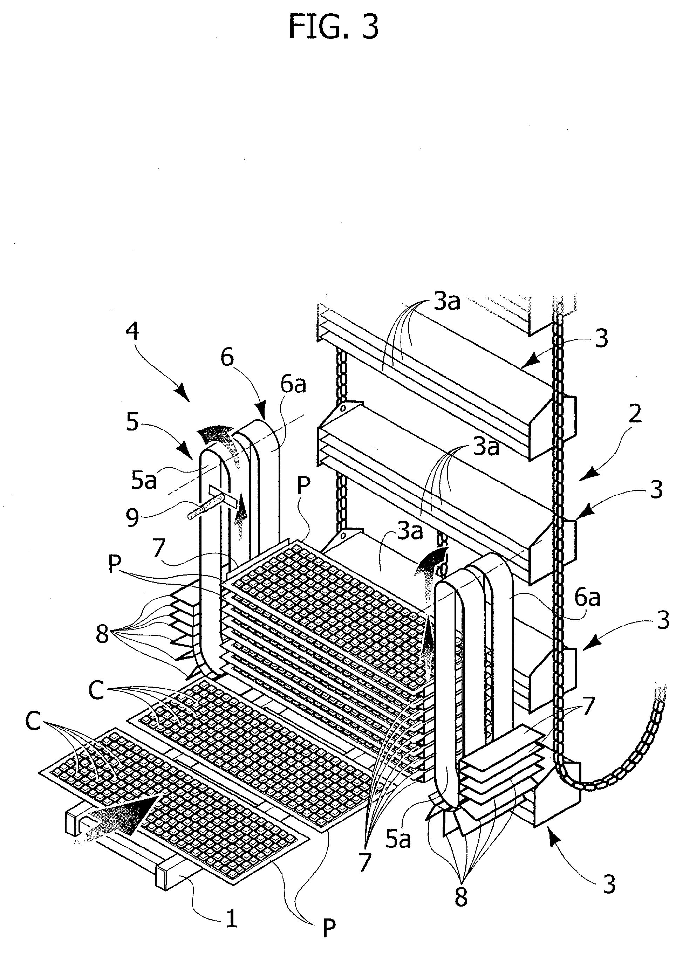

Assume starting from the initial condition represented in Figure 1, in which the brackets 7 of the elevator 5 are in the lowered position, and the brackets 8 of the elevator 6 are also lowered, in the proximity of the brackets 7. Starting from said position, insertion of the plates P coming from the conveying line 1 within corresponding pairs of the brackets 7 starts: in this step, the elevator 5 moves by steps so as to set a pair of homologous brackets 7 in succession in a position corresponding to the plane of the plate P to be inserted each time inside them (Figures 2 and 3).

This is repeated until complete filling of the brackets 7, which, as has been said, are, in the case of the example, eight in number.

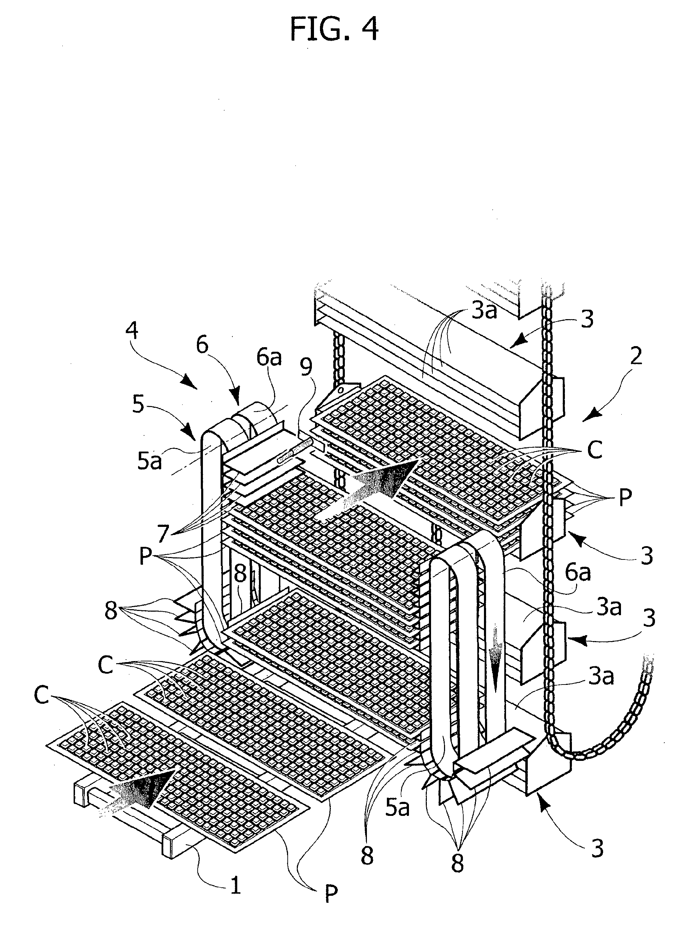

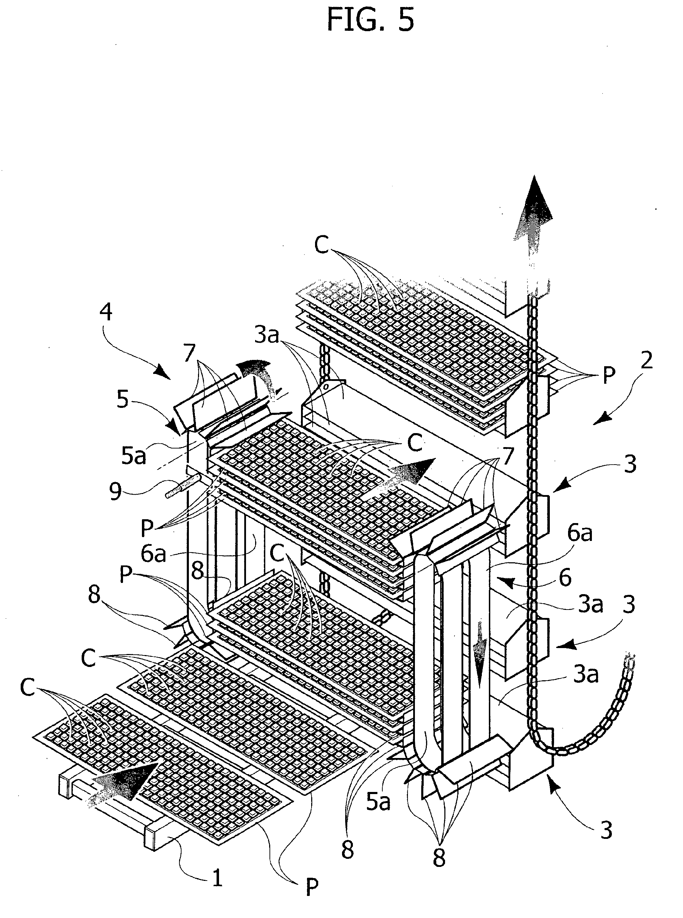

Then the elevator 5 is operated so as to move the brackets 7 with the plates P inserted therein upwards, while, at the same time, the elevator 6 is actuated so as to set the first pair of brackets 8 in a suitable position for receiving the first plate P available, then proceeding by successive steps up to complete filling of all the brackets 8 (Figure 4). During this step, the plates P arranged on the brackets 7 of the elevator 5 are translated horizontally, via the pusher 9, so as to enter a gondola 3 of the buffer unit 2. Since, as has been mentioned, said gondolas 3 each include four shelves 3a set on top of one another, first the plates P of the four top brackets 7 are introduced into a first gondola 3, and then, following upon the movement upwards of the next gondola 3, the plates P of the four bottom brackets 7 (Figure 5) are loaded onto the corresponding shelves 3a. In the mean time, loading of the plates P on the brackets 8 of the elevator 6 proceeds up to complete filling. Before this occurs the brackets 7 of the elevator 5 are brought back downwards, in the vicinity of the brackets 8, which are waiting.

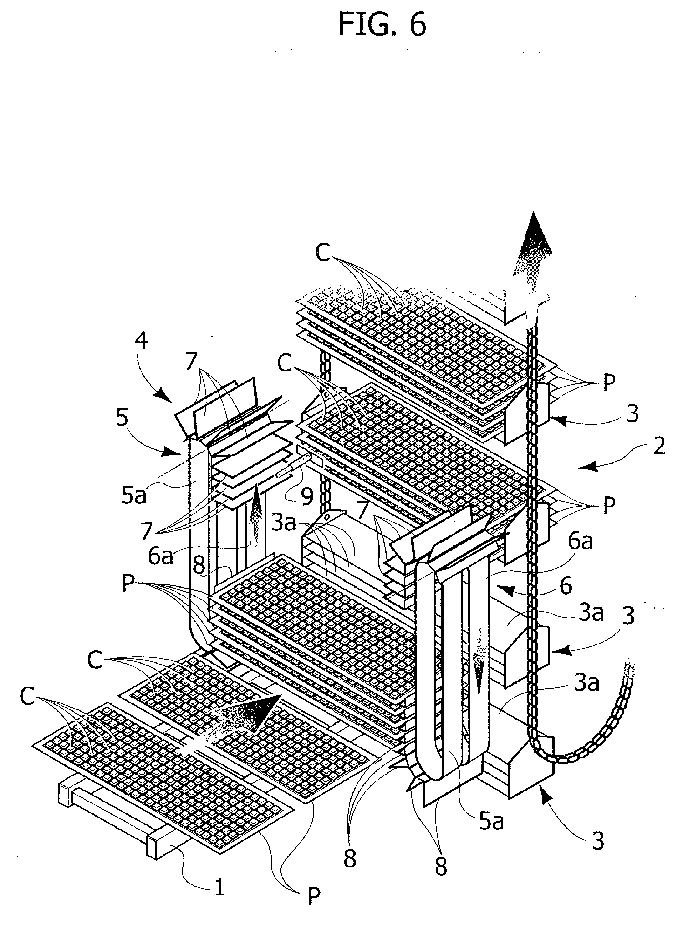

The cycle is repeated then identically by moving alternately the brackets 7 and 8 according to the steps described above, in synchronism with advance of the plates P along the conveying line 1 and with transfer by steps upwards of the gondolas 3 (Figure 6).

It emerges clearly from the foregoing description that the transfer of the plates P from the conveying line 1 to the buffer unit 2 is performed in an efficient and precise way. Thanks to the fact that at each movement of thrust by the ordering device 4 into the buffer unit 2 simultaneous transfer of a number of plates P is obtained (in the case of the example illustrated, as has been said, in sets of four), the risk of errors and imprecisions of positioning of the plates P on the gondolas 3 is reduced accordingly. In addition, the fast return of the brackets 7 or else 8 downwards at the end of the transfer of the respective plates P on the buffer unit 2 enables increase in the time available for said transfer, which enables execution of said operation with greater care and precision.

Of course, the details of construction and the embodiments may vary widely with respect to what is described and illustrated herein, without thereby departing from the scope of the present invention, as defined by the ensuing claims.

Thus, for example, in a simplified version, it is possible to contemplate the presence of just one vertical translator instead of two.

## Claims

1. A device for the transfer of products (C) grouped on plates (P), comprising in combination a horizontal conveying line (1) and a buffer unit (2), wherein said plates (P) are fed in succession by said horizontal conveying line (1), and said buffer unit (2) comprises vertically translatable gondolas (3) for receiving plates (P), wherein each of said gondolas (3) of the buffer unit (2) includes respective multiple shelves (3a) set on top of one another and wherein set between said conveying line (1) and said buffer unit (2) is an ordering device (4), which is actuated in synchronism with the conveying line (1) and buffer unit (2) and includes at least one vertical translator (5, 6), **characterised in that** the at least one vertical translator (5,6) is bearing sets of brackets (7, 8), which are designed to receive from said conveying line (1) corresponding sets of plates (P) set on top of one another to transfer them into corresponding gondolas (3) of the buffer unit (2).

2. The device according to Claim 1, **characterized in that** it comprises a pair of said vertical translators (5, 6), the brackets (7) of the first translator (5) being staggered with respect to the brackets (8) of the second translator (6).

3. The device according to Claim 2, **characterized in that** said vertical translators (5, 6) are actuated independently by steps in a lowered position for receiving said plates (P) from said conveying line (1), continuously during displacement from said lowered position to a raised position for transfer of the plates (P) to the gondolas (3) of the buffer unit (2), and with fast continuous motion during return from said raised position to said lowered position.

4. The device according to one or more of the preceding claims, **characterized in that** it includes pusher means (9) for transferring said sets of plates (P) from the brackets (7, 8) of the or of each vertical translator (5, 6) to the gondolas (3) of said buffer unit (2).

5. The device according to any one of the preceding claims, **characterized in that** the number of said brackets (7, 8) of the or of each vertical translator (5, 6) is twice the number of the shelves (3a) of each gondola (3) of said buffer unit (2).

6. The device according to Claim 5, **characterized in that** said brackets (7, 8) are eight in number.

## Patentansprüche

1. Vorrichtung für den Transfer von auf Platten (P) gruppierten Produkten (C), die eine Kombination aus einer Förderstrecke (1) und einer Puffereinheit (2) umfasst, wobei die Platten (P) nacheinander durch die horizontale Förderstrecke (1) zugeführt werden und die Puffereinheit (2) vertikal verschiebbare Gondeln (3) zum Aufnehmen von Platten (P) umfasst, wobei jede der Gondeln (3) der Puffereinheit (2) entsprechende mehrfache Ablagen (3a) umfasst, die übereinander gesetzt sind, und wobei zwischen der Förderstrecke (1) und der Puffereinheit (2) eine Ordnungsvorrichtung (4) angeordnet ist, die synchron zu der Förderstrecke (1) und der Puffereinheit (2) betätigt wird und wenigstens einen vertikalen Umsetzer (5, 6) umfasst, **dadurch gekennzeichnet, dass** der wenigstens eine vertikale Umsetzer (5, 6) Sätze von Klammern (7, 8) trägt, die ausgebildet sind, um von der Förderstrecke (1) entsprechende Sätze von übereinander gesetzten Platten (P) zu empfangen und diese zu entsprechenden Gondeln (3) der Puffereinheit (2) zu transferieren.

2. Vorrichtung nach Anspruch 1, **gekennzeichnet durch** ein Paar der genannten vertikalen Umsetzer (5, 6), wobei die Klammern (7) des ersten Umsetzers (5) in Bezug auf die Klammern (8) des zweiten Umsetzers (6) gestaffelt sind.

3. Vorrichtung nach Anspruch 2, **dadurch gekennzeichnet, dass** die vertikalen Umsetzer (5, 6) unabhängig voneinander für Schritte zum Empfangen der Platten (P) von der Förderstrecke (1) in einer gesenkten Position, zum kontinuierlichen Transferieren der Platten (P) zu den Gondeln (3) der Puffereinheit (2) während einer Verschiebung von der gesenkten Position zu einer gehobenen Position und zum schnellen und kontinuierlichen Bewegen während einer Rückkehr von der gehobenen Position zu der gesenkten Position betätigt werden.

4. Vorrichtung nach einem oder mehreren der vorstehenden Ansprüche, **gekennzeichnet durch** eine Schiebeeinrichtung (9) zum Transferieren der Sätze von Platten (P) von den Klammern (7, 8) des bzw. jedes vertikalen Umsetzers (5, 6) zu den Gondeln (3) der Puffereinheit (2).

5. Vorrichtung nach einem der vorstehenden Ansprüche, **dadurch gekennzeichnet, dass** die Anzahl der Klammern (7, 8) des oder jedes vertikalen Umsetzers (5, 6) doppelt so hoch wie die Anzahl der Ablagen (3a) jeder Gondel (3) der Puffereinheit (2) ist.

6. Vorrichtung nach Anspruch 5, **dadurch gekennzeichnet, dass** die Anzahl der Klammern (7, 8) gleich acht ist.

## Revendications

1. Dispositif pour le transfert de produits (C) groupés sur des plaques (P), comportant en combinaison une ligne de transport horizontale (1) et une unité de tampon (2), dans lequel lesdites plaques (P) sont avancées en succession par ladite ligne de transport horizontale (1), et ladite unité de tampon (2) comporte des gondoles pouvant être translatées verticalement (3) destinées à recevoir les plaques (P), dans lequel chacune desdites gondoles (3) de l'unité de tampon (2) comprend de multiples étagères respectives (3a) placées l'une au-dessus de l'autre et dans lequel est placé entre ladite ligne de transport (1) et ladite unité de tampon (2) un dispositif de classement (4), qui est actionné en synchronisme avec la ligne de transport (1) et l'unité de tampon (2) et comprend au moins un dispositif de translation vertical (5, 6), **caractérisé en ce que** le au moins un dispositif de translation vertical (5, 6) porte des ensembles de supports (7, 8), qui sont conçus pour recevoir de ladite ligne de transport des ensembles correspondants de plaques (P) placées l'une au-dessus de l'autre (1) afin de les transférer dans des gondoles correspondantes (3) de l'unité de tampon (2).

2. Dispositif selon la revendication 1, **caractérisé en ce qu'**il comporte une paire desdits dispositifs de translation verticaux (5, 6), les supports (7) du premier dispositif de translation (5) étant décalés par rapport aux supports (8) du deuxième dispositif de translation (6).

3. Dispositif selon la revendication 2, **caractérisé en ce que** lesdits dispositifs de translation verticaux (5, 6) sont actionnés indépendamment par paliers dans une position abaissée afin de recevoir lesdites plaques (P) provenant de ladite ligne de transport (1), de manière continue pendant le déplacement depuis ladite position abaissée jusqu'à une position relevée pour le transfert des plaques (P) sur les gondoles (3) de l'unité de tampon (2), et avec un mouvement continu pendant le retour de ladite position relevée à ladite position abaissée.

4. Dispositif selon une ou plusieurs des revendications précédentes, **caractérisé en ce qu'**il comprend des moyens de poussoir (9) destinés à transférer lesdits ensembles de plaques (P) depuis les supports (7, 8) du ou de chaque dispositif de translation vertical (5, 6) jusqu'aux gondoles (3) de ladite unité de tampon (2).

5. Dispositif selon l'une quelconque des revendications précédentes, **caractérisé en ce que** le nombre desdits supports (7, 8) du ou de chaque dispositif de translation vertical (5, 6) est deux fois le nombre d'étagères (3a) de chaque gondole (3) de ladite unité de tampon (2).

6. Dispositif selon la revendication 5, **caractérisé en ce que** lesdits supports (7, 8) sont au nombre de huit.
